# EUROPEAN PATENT SPECIFICATION

(11) **EP 3 491 596 B1**
(45) Date of publication and mention of the grant of the patent: **19.07.2023**
(21) Application number: 17844752.0
(22) Date of filing: 31.08.2017
(51) Int. Cl.: G06Q 10/0833, G06Q 10/083, H04W 4/02, G06Q 10/08, G06Q 50/28

(54) **IMPROVING EFFICIENCY OF A CARGO SHIPPING SYSTEM**
VERBESSERUNG DER EFFIZIENZ EINES FRACHTVERSANDSYSTEMS
AMÉLIORATION DE L'EFFICACITÉ D'UN SYSTÈME D'EXPÉDITION DE MARCHANDISES

(30) Priority: 01.09.2016 US 201615254654
(43) Date of publication of application: 05.06.2019
(73) Proprietor: BlackBerry Limited, Waterloo, Ontario N2K 0A7 (CA)
(72) Inventor: SEAMAN, Conrad Delbert, Waterloo, Ontario N2K 0A7 (CA); DEV, Prabhul, Waterloo, Ontario N2K 0A7 (CA); MOON, Justin Earl, Waterloo, Ontario N2K 0A7 (CA)
(74) Representative: Murgitroyd & Company
(86) International application number: PCT/CA2017/051030
(87) International publication number: WO 2018/039800

(56) References cited:
- US-A1- 2004 167 825
- US-A1- 2005 278 063
- US-A1- 2009 030 770
- US-A1- 2009 088 924
- US-A1- 2009 210 140
- US-A1- 2009 322 510
- US-A1- 2013 342 343
- US-A1- 2015 006 428
- US-A1- 2015 046 229
- US-A1- 2016 117 638

## Description

### TECHNICAL FIELD

The present disclosure relates to improving efficiency of a cargo shipping system.

### BACKGROUND

In a cargo shipping operation, a cargo load can be loaded onto a trailer or a container. A cargo shipping system can inform a driver to drive a truck to pick up the trailer or the container and deliver the trailer or the container to a destination.

US2009030770 discloses a predictive information system and a method that assigns shipping assets (drivers-tractors-trailers) from carriers to transport orders by shippers.

US2009322510 discloses a method that enables reconfiguring the wireless two-way radio frequency data communication device in the network so as to improve efficiency and security of cargo transport using shipping containers.

US2015006428 discloses a computer-readable storage medium for facilitating business transactions between multiple parties in freight industry, includes matching available freight loads with available freight capacity, while negotiating contract between entities.

### SUMMARY

The present invention provides a method as detailed in claim 1. Also provided is an electronic device according to claim 7 and a computer-readable medium according to claim 13. Advantageous features are provided in the dependent claims.

### DESCRIPTION OF DRAWINGS

FIG. 1 is an example cargo shipping system according to an implementation.
FIG. 2 is a flowchart showing a first example process for improving a cargo shipping system according to an implementation.
FIG. 3 is a flowchart showing a second example process for improving a cargo shipping system according to an implementation.
FIG. 4 is a schematic diagram illustrating an example driver selection process according to an implementation.
FIG. 5 is a flowchart showing an example process for determining a ranking of a driver according to an implementation.
FIG. 6 illustrates a high level architecture block diagram of a cargo processing server according to an implementation.
FIG. 7 is a block diagram illustrating an example mobile device according to an implementation.

Like reference numbers and designations in the various drawings indicate like elements.

### DETAILED DESCRIPTION

In some implementations, a dispatcher finds a cargo transportation unit (CTU), e.g., a trailer, chassis or a container, to match a cargo load. The dispatcher can use a cargo shipping system to send a request to a shunt driver to locate the CTU in a yard where many CTUs are parked. The shunt driver can take the CTU to a loading bay or loading area where the CTU can be loaded with goods for transport. Alternatively, the shunt driver may be a crane operator or a robot that picks a CTU from a dock where CTUs are parked. The dispatcher can also find a driver that has a tractor to match the CTU and the cargo load. In some cases, a tractor can include a front end vehicle portion of a truck that includes the engine of the truck. In some cases, the truck and CTU can be combined as one unit that cannot be decoupled. In some cases the CTU may be an intermodal container. The dispatcher can use the cargo shipping system to send a delivery request to the driver to ship the CTU. In some cases, information of the CTU, e.g., the location of the CTU and whether the CTU is fully loaded, are entered manually into the cargo shipping system.

In some cases, a cargo shipping network can have many drivers and CTUs. These many drivers and CTUs can have different capabilities. For example, the CTUs or the vehicles of the driver can be configured to deliver one or more special types of goods, e.g., refrigerated good, fragile goods, explosive goods, livestock, or any other goods that require special care. The CTU can also be of different sizes and may only be pulled by certain types of tractors. There are many different classes of vehicles. A common way to group them is based on gross vehicle weight. Similarly, intermodal containers come in different sizes and are customized for specific uses including refrigeration, heated, standard, and tall. In addition, like vehicles, the chassis and ships used to move intermodal containers can have different capabilities such as maximum tonnage, maximum stacking height, or stacking configurations. These many drivers and CTUs can also have varying availability statuses. For example, a driver or a CTU may be idle or at different stages in a delivery, e.g., loading, arrival, or in different locations on a delivery route. The drivers may have driven a certain duration in a day and thus have limited availability for the day based on regulations, employment contracts, or other safety precautions. Similarly a train, ship, or chassis may have availability or space for a specific delivery route. Furthermore, the drivers can have different delivery records, insurance records, legal restrictions, financial restrictions (e.g. bond) or payment rates that may or may not match a preference of an owner for a particular load. A matching process using manual search by the dispatcher can be time consuming, inefficient, and error-prone as the number of the drivers and CTUs grows.

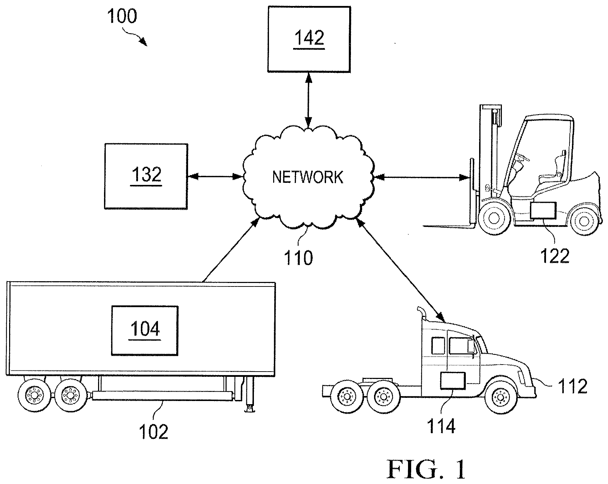

In some implementations, a cargo shipping system can include one or more cargo tracking devices. Each of the cargo tracking devices can be installed on a respective CTU. The cargo tracking device can obtain information of the load status, the door status, and the location status of the CTU and send obtained information to a cargo processing server. The cargo shipping system can include one or more driver client devices. A driver client device can send location and availability information of the driver to the cargo processing server. The cargo processing server can select CTU, driver, or a combination thereof for each load based on the CTU status information and driver availability information. The selection can be further based on supplemental information of the CTU, the driver, or the loads that are stored in a database, sent by the cargo tracking device, sent by the driver client device, or a cargo client device used by a dispatcher or a docket person. The optimized selection process can improve the efficiency of the cargo shipping system. FIGS. 1-7 and associated descriptions provide additional details of these implementations.

FIG. 1 is an example cargo shipping system 100 according to an implementation. At a high level, the example cargo shipping system 100 includes a CTU 102 that is coupled with a cargo tracking device 104, a driver 112 that is coupled with a driver client device 114, a shunt client device 122, a cargo client device 132, and a cargo processing server 142 that are communicably coupled over a network 110.

The CTU 102 can be an unpowered vehicle, a freight container, or any other reusable transport unit that can be used to transport cargo loads between different locations. For example, the CTU 102 can be a trailer with one or more front axles, one or more rear axles, or any combinations thereof. The CTU 102 can include a drawbar that can be used to pull to CTU 102 by a truck. The CTU 102 can also be a freight container built with steel boxes, corrugated boxes, or a combination thereof. In some cases, the example cargo shipping system 100 can include multiple CTUs 102. The multiple CTUs 102 can have different configurations, e.g., size or cargo weight limit. The multiple CTUs 102 can also be configured to carry different types of cargo loads, e.g., fragile goods, explosive goods, refrigerated goods, or livestock. In some cases, the CTU 102 can be chained with one or more other CTUs. The chained CTUs can be pulled by the same tractor. In these or other cases, each of the one or more other CTUs can also be coupled with a respective cargo tracking device. In some implementations, the CTU 102 and a tractor that pulls the CTU can be combined in one integrated and non-separable unit, e.g., a lorry.

The cargo tracking device 104 represents an application, software, software modules, hardware, or any combinations thereof that can be configured to provide status notifications of the CTU 102. The status notification includes a load status, a door status, a location status, or any combinations thereof.

The cargo tracking device 104 can include a load status component that determines the load status of the CTU 102. The load status can indicate whether the CTU 102 is full, empty, or partially full. The load status can also indicate a percentage of occupancy. In some cases, the load status component can include a scanning sensor that scans the interior of the CTU 102. In some cases, the scanning sensor can generate scanned image based on light refraction. Alternatively or in combination, the scanning sensor can generate a scanned image using camera, video recorder, or any other imagery components or ultrasonic/radio/radar waves using non-visible spectrum and/or energy pulses and reflection and refraction measurements. The scanned image can be analyzed by the load status component to determine the load status of the CTU 102. For example, the scanned image can be analyzed to determine the remaining volume of the CTU 102 for additional load. The remaining volume can be indicated using length units, e.g., feet or meters left in the CTU 102 for additional load, area units, e.g., square footage left in the CTU 102 for additional load, or volume units, e.g., cubic feet or meters left in the CTU 102 for additional load. Alternatively or in combination, the load status component can include a weighting sensor that detects the current weight of the CTU 102. The load sensor may also be calibrated to ignore a portion of load, for example load close to the floor which may be refuse or garbage from prior deliveries. The sensor may also be calibrated for certain styles of loading including front to back, side to side, or other variations. Each approach has unique properties when viewed as a scanned image. The current weight of the CTU 102 can be used to compare with the empty weight and the fully loaded weight of the CTU 102 to determine the load status of the CTU 102. In some cases, the fully loaded weight can be set accordingly to a legal weight limit of the CTU 102. Therefore, a CTU that is partially empty can still be 100% loaded if the current weight matches the weight limit of the CTU as stored in the system 100. In some cases, the cargo tracking device 104 can analyze the load data collected by the sensors and transmit the analyzed result, e.g., in percentage or in absolute value, to the cargo processing server 142. Alternatively or in combination, the cargo tracking device 104 can transmit the load status information detected by the sensors, e.g., the scanned image or the detected weight, to the cargo processing server 142 for processing and analysis.

The cargo tracking device 104 can include a door status component that determines a door status or door event of the CTU 102. The door status can indicate whether the door of the CTU 102 is open or closed and the door event can indicate if the door was opened or closed. In one implementation, the cargo tracking device 104 can be installed on the rear door of the CTU 102. The cargo tracking device 104 can include a gyroscope or an accelerometer that can be used to detect the motion of the rear door. In addition, other sensors such as a camera, time of flight sensor, or radar may be used to confirm or augment door status information. The door status component can analyze the data collected by these sensors, remove effects that may cause false positives such as those caused by vibration movement, changes in ambient light, and variability within containers such as size, paint colors and materials which may have different reflectivity, and detect a door open event and a door close event. Alternatively or in combination, the door status component can use ambient light, radar, door seals, door magnets, vibration detector, or any other components to detect the movement and status of the door on the CTU 102.

The cargo tracking device 104 can include a location component that determines a location status of the CTU 102. The location component can include a global positioning system (GPS) unit that receives GPS signals. In some cases, the location components can calculate the location of the CTU 102 based on the received GPS signals. In some cases, the location component can determine one or more location parameters based on the received GPS signals. The location parameters can be used by the cargo processing server 142, or any other location determination units, to determine the location of the CTU 102. In some cases, the cargo tracking device 104 can use additional location information based on signals transmitted by a cellular network or a wireless local area network (WLAN) to determine the location of the CTU 102, or send the additional location information to the cargo processing server 142, or any other location determination units, to determine the location of the CTU 102. In some cases, locations can be determined by using geo-fencing software or algorithms. In some cases, the location information can be used to determine the distances that the CTU 102 has travelled. Alternatively or in combination, the location information can be used to determine whether the CTU 102 travels on the correct delivery route.

The status notification can also include motion status of the CTU 102, humidity, altitude, or temperature of the CTU 102. For example, the cargo tracking device 104 can include a gyroscope, an accelerometer, or a combination thereof that can be used to determine the angular and linear motions of the CTU 102. The cargo tracking device 104 can include an accelerometer that can be used to determine the acceleration of the CTU 102. The motion information can be used to determine location, speed, travel distance, or any combinations thereof of the CTU 102. The cargo tracking device 104 can also include a thermostat, a humidistat, or a combination thereof that can be used to determine the humidity or temperature inside or outside of the CTU 102.

As referred to herein, the CTU 102 may include a cargo tracking device 104 that is affixed to the CTU 102, or is removable from the CTU 102.

The cargo tracking device 104 can also include a wireless communication subsystem that can be configured to send or receive data over the network 110. The wireless communication subsystem can include, for example, one or more antennas, a receiver, a transmitter, a local oscillator, a mixer, and a digital signal processing (DSP) unit. In some implementations, the subsystem can support multiple-input multiple-output (MIMO) transmissions. The wireless communication subsystem can include an application, set of applications, software, software modules, hardware, or any combinations thereof that can be configured to transmit or receive data over a wide area network or local area network using one or more radio access technologies, e.g., wireless local area network (WLAN), Low Power Wide Area Network (LPWAN), Internet of Things (IoT) network, Sigfox network, Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, or the fifth generation (5G) communication network.

The driver 112 can be used to transport the CTU 102 between locations. In some cases, the driver 112 can be a person that drives a powered vehicle (e.g., a tractor) configured to load the CTU 102 and transport the CTU 102. Alternatively or in combination, the driver 112 can be an automated driving system that can transport the CTU 102 without a human conductor on board. The driver may also be a ship or powered engine for a rail car that supports the delivery of many CTUs.

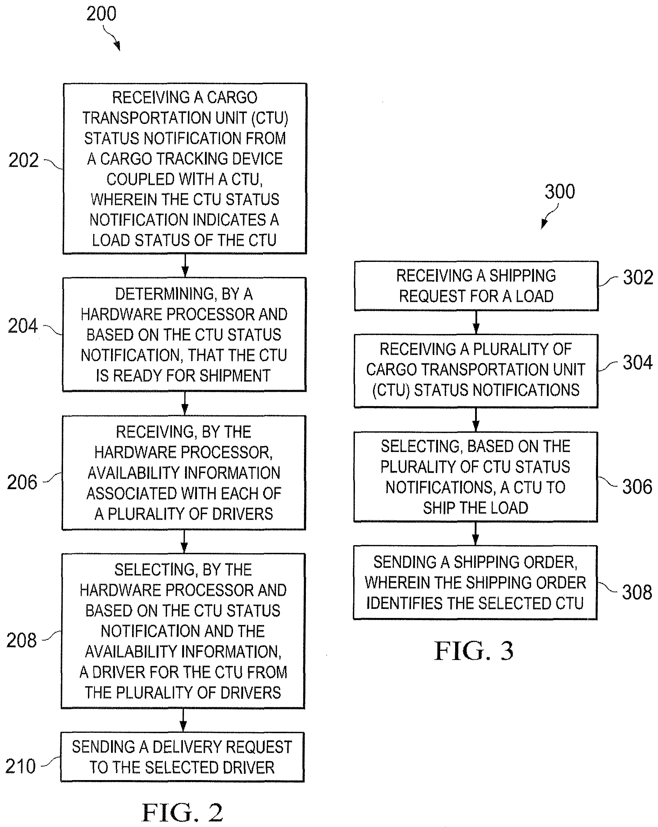

The driver client device 114 represents an application, set of applications, software, software modules, hardware, or any combinations thereof that can be configured to send availability information of the driver 112, receive delivery requests, or a combination thereof. In some cases, the driver client device 114 can be a mobile device used by the driver 112. Additionally or in combination, the driver client device 114 can be a component installed on the tractor used by the driver 112. A driver client application can be installed on the driver client device 114. The driver client application can provide a user interface for the driver 112 to communicate with the cargo processing server 142 or any other entities in the cargo shipping system 100. FIGS. 2-7 and associated descriptions provide additional details of the driver client application.

The shunt client device 122 represents an application, set of applications, software, software modules, hardware, or any combinations thereof that can be configured to notify a shunt driver to pick up the CTU 102. In some cases, shunt client device 122 can include a mobile device having a shunt client application. The shunt client application can provide a user interface for a shunt driver to communicate with the cargo processing server 142 or any other entities in the cargo shipping system 100. FIGS. 3-7 and associated descriptions provide additional details of the shunt client application.

The cargo client device 132 represents an application, set of applications, software, software modules, hardware, or any combinations thereof that can be configured to transmit additional information of the CTU 102, the driver 112, a cargo load on the CTU 102, or any combinations thereof. In some cases, the cargo client device 132 can include a mobile device having a cargo client application. The cargo client application can provide a user interface for a dispatcher, a docket person, or a combination thereof to communicate with the cargo processing server 142 or any other entities in the cargo shipping system 100. In some implementations, the dispatcher or the docket person can also use the cargo client device 132 to request a CTU to pick up a load, request a delivery, confirm or reject a driver, receive a confirmation that a CTU is en route, receive a delivery confirmation and payment information, or any combinations thereof. FIGS. 2-7 and associated descriptions provide additional details of the cargo client application.

The cargo processing server 142 represents an application, set of applications, software, software modules, hardware, or any combinations thereof that can be configured to process CTU status notifications and generate delivery requests. In some cases, the cargo processing server 142 can send a shipping order for a CTU to pick up a load, receive CTU status notification and driver availability information, select driver, send delivery requests, and determine delivery route. FIGS. 2-7 and associated descriptions provide additional details of the cargo processing server.

The network 110 includes a wireless network, a wireline network, or a combination thereof. For example, the network 110 can include one or a plurality of radio access networks (RANs), core networks (CNs), and external networks. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), or LTE-Advanced. In some instances, the core networks may be evolved packet cores (EPCs). In some cases, the network 110 can include a satellite network.

A RAN is part of a wireless telecommunication system which implements a radio access technology, such as GSM, UMTS, CDMA2000, 3GPP LTE, and 3GPP LTE-A. In many applications, a RAN includes at least one base station. A base station may be a radio base station that may control all or at least some radio-related functions in a fixed part of the system. The base station may provide radio interface within their coverage area or a cell for a mobile device to communicate. The base station may be distributed throughout the cellular network to provide a wide area of coverage.

Turning to a general description, a mobile device, e.g., the driver client device 114, the shunt client device 122, or the cargo client device 132, may include, without limitation, any of the following: computing device, mobile electronic device, user device, mobile station, subscriber station, portable electronic device, mobile communications device, wireless modem, wireless terminal, television, printer or other peripheral, vehicle, or any other electronic device capable of sending and receiving data. Examples of a mobile device may include, without limitation, a cellular phone, personal data assistant (PDA), smart phone, laptop, tablet, personal computer (PC), pager, portable computer, portable gaming device, wearable electronic device, health/medical/fitness device, camera, or other mobile communications devices having components for communicating voice or data via a wireless communication network. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used synonymously herein.

In operation, the cargo processing server 142 receives a shipping request for a load. The cargo processing server 142 receives one or more CTU status notifications from one or more cargo tracking devices 104. The cargo processing server 142 selects a CTU 102 to ship the load. The cargo processing server 142 sends a shipping order to the shunt client device 122 to instruct a shunt driver to use the selected CTU 102 to locate and pick up the CTU for loading. FIG. 3 and associated descriptions provide additional details of these implementations.

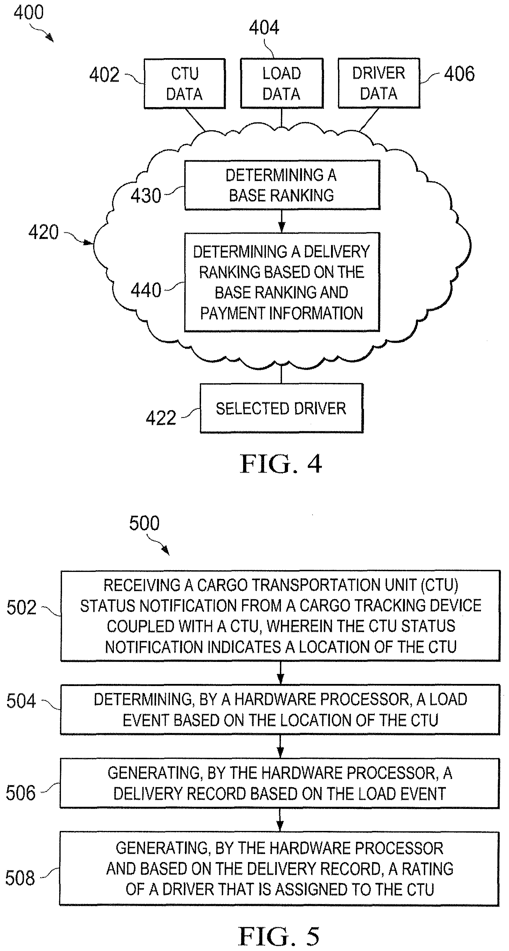

The cargo processing server 142 receives a CTU status notification from the cargo tracking device 104 that is coupled with the selected CTU 102. The cargo processing server 142 determines that the selected CTU 102 is ready for shipment, e.g., based on the load status of the CTU 102. The cargo processing server 142 receives driver availability information from one or more driver client devices 114. The cargo processing server 142 selects a driver 112 to deliver the selected CTU 102. The cargo processing server 142 sends a delivery request to the selected driver 112. In some cases, the cargo processing server 142 receives a confirmation or a rejection from the cargo client device 132 regarding the selection of the driver 112. FIGS. 2 and 4 and associated descriptions provide additional details of these implementations.

The cargo processing server 142 receives updated CTU status notifications from the cargo tracking device 104 that is coupled with the selected CTU 102, and location information from the driver client device 114 that is coupled with the selected driver 112. The cargo processing server 142 generates a delivery record for the shipment. The cargo processing server 142 generates a ranking for the selected driver 112. The ranking can be used for future selections of drivers. FIG. 5 and associated descriptions provide additional details of these implementations.

While elements of FIG. 1 are shown as including various component parts, portions, or modules that implement the various features and functionality, these elements may instead include a number of sub-modules, third-party services, components, libraries, and such, as appropriate. Furthermore, the features and functionality of various components can be combined into fewer components as appropriate.

FIG. 2 is a flowchart showing a first example process 200 for improving a cargo shipping system according to an implementation. The process 200 can be implemented by a cargo processing server, e.g., the cargo processing server 142 shown in FIG. 1. The example process 200 shown in FIG. 2 can be implemented using additional, fewer, or different operations, which can be performed in the order shown or in a different order.

The example process 200 begins at 202, where a CTU status notification is received. The CTU status notification can be sent from a cargo tracking device, e.g., the cargo tracking device 104 shown in FIG. 1, to the cargo processing server over a communications network. As described previously, the cargo tracking device is coupled with a CTU. The cargo tracking device is configured to collect status information of the CTU and send the status information over a communications network. The CTU status notification can include a load status of the CTU, whether a door on the CTU is closed or open, or any other CTU status information. Examples of other CTU status information can include motions of the CTU, temperature or humidity inside or outside of the CTU, distances traveled by the CTU, light condition outside of the CTU, and the altitude of the CTU. The CTU status notification can also include a location information of the CTU. In some cases, the cargo tracking device can determine the location of the CTU, e.g., the longitude and the latitude of the CTU, and include the determined location in the CTU status notification. Alternatively or in combination, the cargo tracking device can determine one or more location parameters, e.g., parameters related to GPS signals, cellular network signals, or a combination thereof, and include the one or more location parameters in the CTU status notification. The one or more location parameters can be used to calculate the location of the CTU.

In some cases, the CTU status notification can also include configuration information of the CTU. The configuration information can include the year and the model of the CTU, the size and max weight of the CTU, the type of the CTU, e.g., whether the CTU is configured to carry special types of loads, e.g., fragile goods, explosive goods, refrigerated goods, livestock, or any other goods that require special care.

In some implementations, the cargo tracking device can be configured to send the CTU status notification in response to a triggering event. In one example, a CTU status notification can be triggered if the cargo tracking device detects a door opening or a door closing event on the CTU. In another example, a CTU status notification can be triggered if the cargo tracking device detects a change of location of the CTU. Other triggering events can include the current loading capacity of the CTU exceeding a configured loading threshold, e.g., 90% of the loading capacity, or the current loading capacity of the CTU dropping below a configured unloading threshold, e.g., 10% of the loading capacity. Alternatively or in combination, the cargo tracking device can be configured to send the CTU status notification periodically. In some cases, the periodicity of sending the CTU status notification can be adapted based on one or more triggering events. For example, the cargo tracking device can determine the speed of the CTU based on the changes of the location of the CTU. The cargo tracking device can increase the updating frequency of the CTU status notification if the speed of the CTU is above a threshold. The CTU status notification can be used to predict destination and estimated time of arrival of the CTU by correlating the location information with route information in the cargo processing server. The cargo processing server can monitor the location and speed of the CTU and send an alert if the CTU is off course.

At 204, the cargo processing server determines that the CTU is ready for shipment based on the CTU status notification. In some cases, the cargo processing server determines that the CTU is ready for shipment when the CTU status notification indicates that the load status of the CTU is full. In some cases, the cargo processing server determines that the CTU is ready for shipment when the CTU status notification indicates that the load status of the CTU meets a configured threshold and the door of the CTU is closed. In some cases, the cargo processing server can determine that the CTU is ready for shipment based on the CTU status notification and other information. For example, the cargo processing server can determine that the CTU is ready for shipment if the load status information in the CTU status notification is confirmed by an indication sent from a docket person, e.g., using a cargo client device described previously, indicating that the CTU is loaded

In some cases, additional information of the load on the CTU can be sent to the cargo processing server. For example, a dispatcher or a docket person can enter supplemental information about the load on the CTU. The supplemental information may also come from other computing systems, e.g., a weather network or back-office systems for a shipping company or a manufacturing company containing specifics about the goods such as size, weight, contents, destination, etc. In one example, the supplemental information can include a type of the load, e.g., whether the load includes fragile goods, explosive goods, refrigerated goods, livestock, or any other goods that require special care. In another example, the supplemental information can include a value of the load, e.g., whether the load includes high value goods, such as antiques or treasures. In yet another example, the supplemental information can include a priority of the load, e.g., a timeframe within which the load needs to be delivered, a destination of the load, or a combination thereof. Other examples of the supplemental information can include: traffic in area that may cause delay, specific pickup time to prevent dwell/dentation, weight for driver/tractor selection (e.g. tractor matches size of load), special instructions such as maximum speed or vibration, insurance requirements on load due to value, bond requirements for driver, or driver ranking required. In some cases, the supplemental information can also include an indication that the CTU is ready for shipment.

In some cases, the supplemental information can be sent using an application running on a mobile device. For example, a cargo client application can be installed on a mobile device used by the dispatcher or the docket person. The cargo client application can output a user interface on the mobile device. The user interface can include one or more user interface objects that can be used to enter the supplemental information. Examples of the user interface objects can include menus, lists, icons, buttons, or any other user interface objects that can be used to input information. The mobile device can send the supplemental information to the cargo processing server. Alternatively or in combination, the dispatcher or the docket person can use a desktop computer, a terminal station, or any other computing device to send the supplemental information. In some implementations, the supplemental information can be pulled from a transportation management system (TMS) that is integrated with the cargo processing server.

In some cases, some or all of the supplemental information can be generated by a docketing system. The docketing system can include a computing device that logs the information of each cargo. In one example, when the cargo is loaded, the docketing system can be triggered to send information about the cargo to the cargo processing server.

At 206, the cargo processing server receives availability information associated with one or more drivers. The availability information can indicate whether the driver is available. The availability information can include the location or location parameters of the driver. In some cases, the availability information can also include the driving record of the driver. The driving record can include the driving distance, the driving time, or a combination thereof in a configured period, e.g., a 12 hour period, a day, a week, or a month. For example, the driving record can indicate how the long the driver has driven in the current day. The driving record may be matched with information on driver regulations such as maximum hours of service to determine how much time the driver has left or how far they might be able to travel. This may further be combined, for example, with traffic and weather data to more accurately predict a range for the driver. Other examples of the availability information can include bond information, insurance information, ranking information, whether the driver can drive across borders, and payment rate of the driver.

In some cases, the availability information of a driver can be sent using a mobile device associated with the driver. For example, a driver client application can be installed on a mobile device owned by the driver or on the vehicle used by the driver. The driver client application can output a user interface on the mobile device. The user interface can include one or more user interface objects that can be used to enter the availability information. For example, the driver can select a user interface object to indicate that the driver is available. The driver client application can also determine the location or the location parameters associated with the driver using one or more location determination modules of the mobile device. The driver client application can also record the driving record of the driver. For example, the driver client application can track the distance or the time that the driver has driven in a configured period based on input from the driver, location changes detected by the mobile device, or a combination thereof. The driver client application may also calculate hours driven based on GPS location, angular velocity, and vibration as detected by the mobile device. For example, since the driver is likely to carry the mobile device installed with the driver client application with the driver, if the speed of the mobile device exceeds a threshold, e.g., 20km/hr, it can be determined that the driver is likely driving and the driver client application can accumulate the driving hours and distances for the driver.

The availability information can be sent periodically or based on a triggering event. The triggering event can include a user input, e.g., a user interaction made by the driver using the mobile device. The triggering event can also include a change of delivery status of the driver. For example, the availability information can be sent when a driver has completed a delivery. In some cases, whether the delivery has been completed can be determined based on the location of the driver, the door status, the load status or the change of the load status, or any combinations thereof. For example, if the load status of the CTU changes from 90% to 70%, the door of the CTU is closed, the location of the CTU is at a drop off destination, then the delivery can be determined to be completed. The driver client application and the cargo tracking service can be used in combination to predict and confirm delivery with high accuracy. For example, if the cargo tracking device indicates a delivery based on load and location, the delivery status can be cross checked against the location or other information of the driver reported by the driver client application for confirmation. Supplemental information described previously can also be used to confirm the delivery location or destination.

At 208, the cargo processing server selects a driver to deliver the CTU. The driver can be selected among a plurality of drivers based on their availability information, the CTU status notification of the CTU, the supplemental information of the load on the CTU, or a combination thereof. In some cases, the driver can be selected further based on supplemental information of the driver. The supplemental information of the driver can be sent to the cargo processing server by the driver, stored in a data storage device accessible to the cargo processing server, or a combination thereof. The supplemental information of the driver can include the information of the truck used by the driver for the delivery. Examples of the information of the truck can include whether the truck can handle special type of the load, e.g., fragile goods, explosive goods, refrigerated goods, livestock, the weight limit of the load for truck, the size of the truck, the make and model of the truck, the year of the truck. The supplemental information of the driver can also include additional information of the driver, including, e.g., the driving preferences of the driver such as area and hours of operations, the safety record of the driver, the on-time percentage of the driver. The supplemental information of the driver can also include regulatory or enterprise policy information, e.g., the hour limit and distance limit of the driver in a time period. In addition, the supplemental information of the driver can include the financial information of the driver, e.g., a rate of payment of the driver. FIG. 4 and associated descriptions provide additional details on the driver selection process.

At 210, the cargo processing server sends a delivery request to the selected driver. In one example, the delivery request can be sent to the driver client application running on the mobile device of the selected driver. The driver client application can output a notification on the mobile device to alert to the selected driver that a cargo load is ready to be shipped. The delivery request can also include information about the load, e.g., the location, identifier (e.g., container number), the size, the destination, the payment, or any combinations thereof.

In some implementations, the selected driver can confirm whether he agrees to deliver the load indicated by the delivery request. The selected driver can send a confirmation response, e.g., using the driver client application, to the cargo processing server. Alternatively, the selected driver can send a rejection response. The cargo processing server can then select a different driver and send a delivery request to the different driver.

In some cases, the cargo processing server can determine that more than one drivers are suitable to deliver the CTU. In these or other cases, the cargo processing server can send delivery requests to multiple selected drivers. Among the multiple selected drivers, the driver that sends the confirmation response first can receive a confirmation

In some implementations, a dispatcher or a docket person can approve the driver before the delivery is confirmed. In one example, the cargo processing server can send the availability information of the selected driver, some or all of the supplemental information of the selected driver, or a combination thereof to the cargo client application running on a mobile device of the dispatcher or the docket person. The cargo client application can output the received information on the mobile device. The dispatcher or the docket person can approve or reject the selected driver. The cargo client application can send the approval or rejection response to the cargo processing server. In some cases, the approval process can be performed before the delivery request is sent to the selected driver. If the selected driver is approved, the cargo processing server or dispatcher can proceed to send the delivery request to the selected driver. If the selected driver is rejected, the cargo processing server can select a different driver. Alternatively, the approval process can be performed after the delivery request is sent to the selected driver and the selected driver sends a confirmation response. If the selected driver is approved, the cargo processing server can send a confirmation order to the selected driver. If the selected driver is rejected, the cargo processing server can send a cancellation order to the selected driver and select a different driver.

If the selected driver is confirmed, the selected driver can drive to the location of the CTU to pick up the CTU. The cargo processing server can receive updated location information of the selected driver, e.g., from the driver client application discussed previously. In some cases, the cargo processing server can send the updated location information of the selected driver to the cargo client application so that the dispatcher or the docket person can know the location and the progress of the selected driver.

In some cases, the CTU and the tractor can be implemented in a single unit, e.g., a lorry. In these or other cases, upon receiving a delivery request, the driver can drive the combined CTU-tractor unit to a loading area to load the goods on the CTU.

After the selected driver arrives at the location of the CTU, the selected driver can hitch the CTU onto the tractor and begin delivery. The cargo processing server can receive updated location information of the selected driver from the driver client device. The cargo processing server can also receive updated location information of the CTU from the cargo tracking device coupled with the CTU. The cargo processing server can compare the location information of the selected driver and the CTU. If the location information matches, the cargo processing server can determine that the CTU is picked up. In response, the cargo processing server can send a confirmation message to the cargo client device of the dispatcher or the docket person. The confirmation message can indicate that the CTU has been picked up and is en route to its destination. In some cases, the cargo processing server can send updated delivery information to the dispatcher or the docket person. The updated delivery information can include the location information of the CTU, the selected driver, or a combination thereof. The cargo processing server can also calculate estimated time of arrival, miles driven, or times in transit and send any of this information to the dispatcher or the docket person. This information can be used to determine the delivery progress and total payment for the delivery.

In some cases, the cargo processing server can determine that the CTU has been delivered to the destination based on the location information of the CTU, the selected driver, or a combination thereof. In addition, the cargo processing server can determine that the delivery has been completed based on updated CTU status information sent by the cargo tracking device. For example, the updated CTU status information can indicate a door opening event of the CTU, and if the location information of the CTU matches the destination when the door opening event occurs, the cargo processing server can determine that the CTU has been delivered. In some cases, the destination can be provided by a transportation management system (TMS) that is integrated with the cargo processing server. Alternatively or in combination, the change of the load status can also be used to determine that the CTU has been delivered. In response, the cargo processing server can send the updated delivery information to the dispatcher or the docket person indicating that the delivery has been completed. The cargo processing server can also determine that a CTU has been loaded based on changes of the load status of the CTU (e.g., an increasing of current loading capacity), location of the CTU (e.g., at a designated pick up location), door status of the CTU (e.g., an open event followed by a close event), or any combinations thereof.

The cargo processing server can also calculate the fare and send the fare information to the selected driver, the dispatcher or the docket person, or a combination thereof.

FIG. 3 is a flowchart showing a second example process 300 for improving a cargo shipping system according to an implementation. The process 300 can be implemented by a cargo processing server, e.g., the cargo processing server 142 shown in FIG. 1. The example process 300 shown in FIG. 3 can be implemented using additional, fewer, or different operations, which can be performed in the order shown or in a different order.

The example process 300 begins at 302, where a shipping request for a load is received. The shipping request can be sent by a dispatcher or a docket person, e.g., using a cargo client application that is installed on a mobile device, when a load is ready for pickup and delivery. The cargo client application can output a user interface on the mobile device. The user interface can include one or more user interface objects that can be used to enter information associated with the shipping request. Examples of the user interface objects can include menus, lists, icons, buttons, or any other user interface objects that can be used to input information. The mobile device can send the shipping request to the cargo processing server. Alternatively or in combination, the dispatcher or the docket person can use a desktop computer, a terminal station, or any other computing device to send the shipping request.

The shipping request can include supplemental information of the load to be picked up. The supplemental information can include: a type of the load, e.g., whether the load includes fragile goods, explosive goods, refrigerated goods, livestock, or any other goods that require special care; a value of the load, e.g., whether the load includes high value goods, such as antiques or treasures; a priority of the load, e.g., a timeframe within which the load needs to be delivered; a destination of the load, or any combinations thereof. Other examples of the supplemental information included in the shipping request can include: traffic in area that may cause delay, specific pickup time to prevent dwell/dentation, weight for driver/tractor selection (e.g. tractor matches size of load), special instructions such as maximum speed or vibration, insurance requirements on load due to value, bond requirements for driver, driver ranking required, and manifest information that includes the details of the load, e.g., a waybill.

In some implementations, some of the supplemental information of the load can be sent from a transportation management system (TMS) that is integrated with the cargo processing server. For example, the TMS can determine the route of delivery of the load and send the route information to the cargo processing server.

At 304, a plurality of CTU status notifications are received. Each CTU status notification can be sent from a different cargo tracking device, e.g., the cargo tracking device 104 shown in FIG. 1, to the cargo processing server over a communications network. As described previously, each cargo tracking device is coupled with a respective CTU and is configured to collect status information of the respective CTU to the cargo processing server. The CTU status notification can include a load status of the CTU, a door status of the CTU, motions of the CTU, temperature or humidity inside or outside of the CTU, distances traveled by the CTU, light condition outside of the CTU, location information of the CTU. The CTU status notification can also include configuration of the CTU, e.g., the year and the model of the CTU, the size and max weight of the CTU, the type of the CTU, e.g., whether the CTU is configured to carry special types of loads, e.g., fragile goods, explosive goods, refrigerated goods, livestock, or any other goods that require special care. In some cases, the configuration information of the CTU can be stored in a database. The cargo processing server can retrieve the configuration information for each CTU.

At 306, the cargo processing server selects a CTU to ship the load. The cargo processing server can select the CTU based on the supplemental information of the load and the CTU status notification of the CTU. In some cases, the selection can be further based on the configuration information of the CTU that is retrieved by the cargo processing server. In one example, the cargo processing server can use the load status of each CTU reported by the respective cargo tracking device in the selection process. If a CTU is fully loaded, or if the CTU is partially loaded but the remaining load capacity is less than the load, the CTU cannot be selected for the load. Instead, a CTU that has sufficient load capacity can be selected. In another example, the cargo processing server can use the configuration information of the CTUs in the selection process. If a load is a type of load that requires special care, then a CTU that has the matching type of the load can be selected. In some cases, the selection can include multiple selection factors. For example, both the load capacity and the type of the CTU discussed above can be considered in the selection process.

Other selection factors can also be considered. In one example, if a CTU's door status is closed, the CTU may be ready for pickup. On the other hand, if a CTU's door status is open, the CTU may still be in process of loading and thus may take additional time. Therefore, the cargo processing server can select the CTU with a closed door status. In another example, the cargo processing server can compare the delivery route of the load and the planned route of CTU for delivering other loads on the CTU, and select a CTU having a current planned route that matches closely with the delivery route of the load.

In some cases, for each selection factor, a matching score can be determined for each CTU. The matching score can be determined based on the compatibility between the CTU and the load. For example, for the selection factor of the delivery route, an extra route time for each CTU to deliver the load in addition to current loads of the CTU can be calculated. The extra route time can be converted to a matching score for the selection factor of the delivery route. A CTU with low extra route time can receive a high matching score and a CTU with high extra route time can receive a low matching score. A total matching score for each CTU can be determined by summing the matching score for each selection factor. The CTU with the highest total matching score can be selected for the load. In some cases, the total matching score can be calculated using a weighted sum. In these cases, each of the selection factors can be assigned a weight. A selection factor that has a higher importance can be assigned a higher weight value. The matching score for each of the selection factors is multiplied with the weight of the selection factor to generate weighted matching score. The weighted matching score for each selection factor is added to generate the weighted total matching score. The CTU with the highest weighted total matching score can be selected for the load.

In some cases, the cargo processing server can determine that none of the multiple CTUs meets the selection criteria. The cargo process server can send a request, e.g., to other yards, for information of other CTUs.

At 308, a shipping order is sent. The shipping order identifies the CTU that is selected for the load. In some case, the shipping order can indicate a location of the selected CTU, e.g., the docket number where the selected CTU is parked. In some cases, the shipping order can indicate information of the load to be picked up, e.g., the location, the size, the weight, the serial number, or other information of the load. In some cases, the shipping order can also indicate the destination of the selected CTU.

In some cases, the cargo processing server can send the shipping order to a shunt driver. For example, the shipping order can be sent to a cargo client device used by the shunt driver. The cargo client device can output a user interface on the device. The user interface can include information indicated by the shipping order. The shunt driver can use the outputted information to bring the selected CTU to the loading dock for loading. Alternatively or additionally, the shipping order can be sent to a driver that is associated with the selected CTU, and the driver can bring the selected CTU to the loading dock. For example, the CTU and the tractor can be implemented in a single unit, e.g., a lorry. In these or other cases, the driver can drive the combined CTU-tractor unit to a loading area to load the goods on the CTU and deliver the goods.

FIG. 4 is a schematic diagram illustrating an example driver selection process 400 according to an implementation. The process 400 can be implemented by a cargo processing server, e.g., the cargo processing server 142 shown in FIG. 1. The example process 400 shown in FIG. 4 can be implemented using additional, fewer, or different operations or components, which can be performed in the order shown or in a different order.

As shown in FIG. 4, the driver selection process takes input of CTU data 402, load data 404, and driver data 406 to select a driver to deliver a CTU. The CTU data 402 includes data related to the CTU to be delivered. As discussed previously, the CTU data 402 can include a load status of the CTU, a door status of the CTU, motions of the CTU, temperature or humidity inside or outside of the CTU, distances traveled by the CTU, light condition inside and outside of the CTU, location information of the CTU, weight of the CTU or any combinations thereof. The CTU data 402 can also include configuration of the CTU, e.g., the year and the model of the CTU, the size and max weight of the CTU, the type of the CTU, e.g., whether the CTU is configured to carry special types of loads, e.g., fragile goods, explosive goods, refrigerated goods, livestock, or any other goods that require special care. In some cases, as discussed previously, the CTU data 402 can include the information in the CTU status notifications that are transmitted by the cargo tracking device coupled with the CTU. Alternatively or in combination, the CTU data 402 can include supplemental information of the CTU that are stored in a database and retrieved by the cargo processing server.

The load data 404 includes data related to the loads on the CTU to be delivered. The load data 404 can include a type of the load, e.g., whether the load includes fragile goods, explosive goods, refrigerated goods, livestock, or any other goods that require special care; a value of the load, e.g., whether the load includes high value goods, such as antiques or treasures; a priority of the load, e.g., a timeframe within which the load needs to be delivered; a destination of the load, or any combinations thereof. Other examples of the load data 404 can include: a route for the load, traffic in area that may cause delay, specific pickup time to prevent dwell/dentation or spoilage, weight for driver/tractor selection (e.g., tractor matches size of load), special instructions such as maximum speed or vibration, insurance requirements on load due to value, bond requirements for driver, driver ranking required, and manifest information that includes the details of the load, e.g., a waybill. In some cases, the load data 404 can include an offered payment associated with the load, e.g., the payment or the range of the payment that the owner of the load is willing to pay for the delivery of the load. The offered payment can include a total payment for the delivery, a unit payment rate based on distance or time, or a combination thereof. The offered payment can also include premium payment provided based on the type of goods (dangerous, nuclear, chemical, explosive, sensitive, fragile, precious, insured, spoilable, unstable). The load data 404 can also include size in feet/inches/meters in either linear (LXWXH) or cubic dimensions. This size information can be used to determine if the load can fit on an empty or partially full container. In some cases, as discussed previously, the load data 404 can include supplemental information of the load inputted by a dispatcher or a docket person, e.g., using a cargo client application that is installed on a mobile device or any other computing devices. Alternatively or in combination, the load data 404 can include supplemental information of the load sent from a transportation management system (TMS) that is integrated with the cargo processing server. In some cases, a CTU can have multiple loads with different size, delivery requirements, or offered payment. In these cases, the load data 404 can include the load information for each of the loads on the CTU.

The driver data 406 includes data related to the each driver who may deliver the load. The driver data 406 can include the location or location parameters of the driver, the driving record of the driver, e.g., the driving distance and time for the driver during a configured period, how long and how far the driver can drive for the remaining of the configured period, or a combination thereof. The driver data 406 can also include the bond information of the driver, the insurance information of the driver, and whether the driver can drive across borders. The driver data 406 can also include ratings of the driver. FIG. 5 and associated descriptions provide additional details of the ratings of a driver. In some cases, the driver data 406 can also include a requested payment rate of the driver. The requested payment rate can include unit payment rate based on distance, time, or a combination thereof. In some cases, as discussed previously, the driver data 406 can include the availability information sent by a driver client application from a mobile device associated with the driver. Alternatively or in combination, the driver data 406 can include supplemental information of the driver that is stored in a database and retrieved by the cargo processing server.

At 420, the cargo processing server receives the CTU data 402, the load data 404, and the driver data 406 to determine a ranking of each of the drivers in order to gauge suitability to deliver the goods in the CTU. The cargo processing server then selects an optimal driver 422 for a CTU. In some cases, the cargo processing server can determine a pool of candidate drivers. In one example, the pool of candidate drivers can be determined based on the location of the CTU and the drivers. A driver can be included in the pool of candidate drivers if the distance between the current location of the CTU and the current location of the driver is below a threshold. For example, a radius of 100km may be drawn around a CTU and all drivers within the radius may be considered as initial candidates.

In some cases, the cargo processing server can determine a base ranking of each candidate driver, and adjust the base ranking to determine a delivery ranking of the candidate driver using payment information. For example, at 430, the cargo processing server can determine a base ranking of each of the drivers based on the matching of the loads on the CTU and the driver. In some cases, the determination can be calculated based on one or more selection factors. For example, the selection factors can include whether the availability of the driver matches a delivery route of the CTU. The availability of the driver can be determined based on the driver data 406, including e.g., the hours and distance driven by the driver, whether the driver can drive across borders, and the regulation and contracts of the driver. The delivery route of the CTU can be included in the CTU data 402, the load data 404, or a combination thereof.

The selection factors can also include a wait time for the driver to start the delivery. For example, the location of the driver and the CTU can be determined based on the driver data 406 and the CTU data 402, respectively. An estimated wait time can be calculated based on the distance between the location of the driver and the CTU. In some cases, e.g., if the driver is en route for a current delivery, the estimated wait time can include the time required to complete the current delivery. Alternatively or additionally, the selection factors can include distance between the driver and the CTU. The wait time and estimate time to drive may include traffic information to improve estimates.

The selection factors can also include whether the driver record of the driver matches the rating requirement of the loads on the CTU. In one example, the driver record of the driver can include one or more ratings of the drivers based on previous delivery. The ratings can include a safety rating, a reliability rating, or a combination thereof. These ratings can be determined based on historical record of the driver's on-time delivery percentage, reliability, accidents, lost goods, stolen goods, failure to delivery, or other information. FIG. 5 and associated descriptions provide additional details of the ratings of a driver. The ratings of the driver can be used to compare the rating requirement of the loads set by the owner of the loads. In some cases, if multiple loads on the same CTU have different rating requirements, the strictest rating requirement can be used to compare with the rating of the driver.

The selection factors can also include whether the capability of the driver or the tractor driven by the driver matches the CTU. For example, a CTU may have a size, weight, or special type of care that requires a particular type of tractor or a driver with a particular license. The CTU data 402 can include the requirement information and the driver data 406 can include the related information for the tractor and the driver for comparison.

In some cases, for each selection factor, a matching score can be determined for each driver. The matching score can be determined based on the compatibility between the driver and the load. For example, each matching score can be determined based on how well the availability, the driving record, and the capability of driver match the CTU or the loads on the CTU. For these or other factors, a high score can be assigned if the driver matches well with the load and a low score can be assigned if the driver does not match well with the CTU. A high score can also be assigned to driver if the wait time discussed previously is small, and a low score can be assigned if the wait time is large. In some cases, a threshold can be set for one or more selection factor. For example, a max wait time can be set. If the wait time associated with the driver is above the max wait time, the matching score is set to zero and the driver is disqualified and removed from the candidate drivers for that load. Alternatively or additionally, a max distance can be used to disqualify a driver.

A total matching score for each driver can be determined by summing the matching score for each selection factor. In some cases, the total matching score can be calculated using a weighted sum. In these cases, each of the selection factors can be assigned a weight. A selection factor that has a higher importance can be assigned a higher weight value. The matching score for each of the selection factors is multiplied with the weight of the selection factor to generate weighted matching score. The weighted matching score for each selection factor is added to generate the weighted total matching score.

The base ranking of each driver can be determined based on the total matching score. For example, a driver with a higher score can be assigned to a higher base ranking number, and the driver with a lower score can be assigned to a lower based ranking number. A higher rank indicates a better matching between the driver and the CTU.

In some cases, the selected driver 422 can be determined based on the base ranking. Alternatively or in combination, at 440, the cargo processing server can use payment information to adjust the base ranking to determine a delivery ranking of the driver.

For example, the cargo processing server can calculate a requested payment for each of the drivers based on the requested payment rate of the respective driver in the driver data 406. A delivery ranking can be determined based on the requested payment and the base ranking. The cargo processing server can select the driver with the lowest delivery ranking as the selected driver 422. In one example, the base ranking can be divided by the requested payment to generate the delivery ranking. In this example, if a first driver has a slightly lower base ranking but a lot lower requested payment than a second driver, the first driver can have a higher delivery ranking and therefore becomes a better candidate than the second driver.

In one example, drivers 1-4 are available in the candidate pool. The base ranking of these drivers 1 to 4 is 10, 4, 3, and 2, respectively, with the driver 1 has the best ranking (10) and driver 4 has the worst base ranking (2). The requested payments of drivers 1-4 are $5.00, $2.50, $3.00, and $0.50 per mile. If each base ranking is divided by the payment the resulting delivery ranking for drivers 1-4 is 2, 1.6, 1, and 4. While driver 4 has the worst base ranking, when the base ranking is combined with the requested payment their delivery ranking becomes the best. As may be appreciated many possible ranking methods are possible any may be selectively used depending on the specific optimization goals for the system. For example, in some cases environmental responsibility may be the most important and distance can have the highest weight in the optimization. In other cases economics may be considered the most important and the lowest payments to drivers can be given the highest priority.

In some cases, the cargo processing server can determine the offered payment for the loads based on the payment information, e.g., total payment or the unit payment set by the owner of the loads for each load, included in the load data 404. If a driver has a requested payment that is higher than the total offered payment of the loads on the CTU, the driver can be disqualified.

In some cases, the requested payment can be used to bid on the shipment. Alternatively or in combination, the offered payment information of the load can be included in the load data 404. The offered payment information can be sent to the driver, and the driver can confirm the delivery if the offered payment is acceptable.

In some implementations, a market rate can be used to determine the delivery cost. The market rate can include a base rate and a surge rate. For example, the cargo processing server can calculate a base rate for shipments in a given region based on standards, posted rates, averages, gas prices, tractor prices, wages, and other factors. In some cases, the base rate may not be appropriate. For example, there may be a lot of demand and a shortage of drivers. In these cases, a surge rate, or rate multiplier, can be applied on top of the base rate. In some cases, the cargo processing server can determine the number of available drivers and CTUs to deliver in a geographic area and apply a surge rate accordingly.

In some cases, multiple CTUs are available for delivery. In these or other cases, the cargo processing server can perform a selection process with multiple iterations. In one example, the cargo processing server can use a selection process that optimizes the payment for each CTU. In this or other examples, the cargo processing server can determine the delivery rankings for each driver for a first CTU as discussed previously. The cargo processing server can select the driver with the highest delivery ranking for the first CTU. The cargo processing server can remove the selected driver from the available drivers and select the driver for the second CTU from the remaining drivers.

Alternatively or in combination, the cargo processing server can use a selection process that optimizes the payment for each driver. For example, after selecting the driver for the first CTU, the cargo processing server can select the driver for the second CTU without removing the selected driver from the available drivers. Therefore, a driver may be selected for multiple CTUs. In these or other cases, the driver can be selected to deliver the CTU that provides the maximum payment for the driver. Both the selected CTU and the selected driver are then removed and the selection process iterates again for the rest of the CTUs and the drivers.

In some cases, the cargo processing server can choose different optimization strategies based on the number of CTUs and the available drivers and their associated tractors. In some cases, the cargo processing server can provide an interactive user interface for an administrator to select one or more particular optimization strategies. For example, the cargo processing server can use the selection process that optimizes the payment for each CTU if the number of drivers is higher than the number of CTUs. The cargo processing server can use the selection process that optimizes the payment for the driver if the number of drivers is less than the number of CTUs.

In some cases, a waterfall approach can be used. For example, a pool of candidate drivers can be determined to include 1000 drivers that are within 100 km of the CTU. A limitation on base rankings below a specified threshold can be applied resulting in only 100 drivers. A second limitation on reliability ratings below a specified threshold can be applied leaving only 10 drivers. A third limitation on qualification to deliver dangerous goods can be applied leaving 1 driver. The remaining driver is selected. In some cases, additional rounds of limitation can be applied until one driver is left. In an alternate embodiment the waterfall approach is used until a small group of drivers is left and the CTU is offered to the small group. The first driver to respond or accept is given the CTU delivery.

FIG. 5 is a flowchart showing an example process 500 for determining a ranking of a driver according to an implementation. The process 500 can be implemented by a cargo processing server, e.g., the cargo processing server 142 shown in FIG. 1. The example process 500 shown in FIG. 5 can be implemented using additional, fewer, or different operations, which can be performed in the order shown or in a different order.

The example process 500 begins at 502, where a CTU status notification is received at the cargo processing server. As described previously, the CTU status notification can be sent from a cargo tracking device that is coupled with a CTU over a communications network. The CTU status notification can include a load status of the CTU, whether a door on the CTU is closed or open, location information of the CTU, configuration information of the CTU, or any other information associated with the CTU. At 504, a load event is determined based on the CTU status notification. A load event can include delivery start, delivery end, offloading, uploading, waiting, early, late, missing or any other events associated with delivery of the CTU including events related to timing in support of just-in-time delivery. A delivery start event indicates that the delivery for a load on the CTU has started. A delivery end event indicates that the CTU has reached the destination for a load. An offloading event indicates that the load has been taken off the CTU. An uploading event indicates that an additional load has been put on the CTU.

In some cases, the load event can be determined based on a correlation between the location of the CTU and the information associated with the load. For example, if the location information included in the CTU status notification matches the destination of the load, then the cargo processing server can determine that the delivery has ended and a delivery end event can be determined. In some cases, additional information can be used to further confirm the load event. In one example, as described previously, the cargo processing server can also receive location information of a driver that is assigned to deliver the CTU from a driver client device associated with the driver, and confirm the delivery end event if the location of the driver also matches the destination of the load.

Alternatively or additionally, the cargo processing server can use other information included in CTU status notification to determine the load event. For example, the cargo processing server can use the door status information, the load status information, or the motion information included in the CTU status notification to determine the load event. As described previously, this information can be used to indicate whether the door of the CTU is opened or closed, the current load within the CTU, and whether the CTU is moving or is at a stop. The cargo processing server can use this information to determine the load event. In one example, if the CTU is stationary, the door is open, and the storage inside of the CTU is reduced by an amount that matches a load, the cargo processing server can determine that a delivery for the load has ended. In another example, if the CTU starts to move, the door is closed, and the location of the CTU changes from the location of the load, the cargo processing server can determine that a delivery has started. In another example, if the door is closed, the load sensor shows that the CTU is partially or fully loaded, and a docket person confirms loading using the cargo client device 132, then the cargo processing server 142 can determine that a delivery has started.

At 506, a delivery record is generated based on the load event. A delivery record can include the duration, distance, or a combination thereof for the delivery of the load. For example, if a delivery end event for a load is determined, the cargo processing server can search for a delivery start event associated with the same load. The cargo processing server can determine the duration of the delivery based on the time stamps of the delivery start event and the delivery end event of the same load. The cargo processing server can also determine the distance of the delivery based on the location information associated with these events. In some cases, the delivery record can also include information of the load, e.g., type, size, weight, or any other information. As described previously, in some cases, the cargo processing server can receive the load information from a cargo client application used by a dispatcher or a docket person, or from a TMS.

In some cases, the delivery record can also include load delivery result information. The load delivery result information can include whether some or part of the load is lost or damaged, whether the delivery is on-time or late, or other information. In some cases, the load delivery result information can be inputted by a docket person that receives the load using a cargo client application. The cargo client application can send the delivery result information to the cargo processing server.

In some cases, a delivery record can include information of multiple deliveries for the driver. For example, the delivery record can include the information of current delivery and previous deliveries made by the driver.

In some cases, the delivery record can include other information of the driver. For example, the delivery record can include the number and types of accidents and the number of types of traffic violations made by the driver. Information about the driver may also include regulatory information such as bonds, driving record, police record, or other licensing information.

At 508, the cargo processing server generates a rating for the driver assigned to the delivery. The rating can be generated based on the delivery record. In some cases, multiple ratings can be maintained for a driver. For example, a driver can have a reliability rating, which indicate whether the driver is reliable in his delivery. The factors used to determine the reliability rating can include information about on-time/late delivery, whether the loads are successfully delivered, lost, damaged, or stolen. A driver can also have a safety rating, which indicates whether the driver has safe driving habits. The safety rating may incorporate factors such as accident rate, traffic violations, insurance ratings, insurance coverage, demerit points, and other driver ranking information which can be input by the driver or their employer.

As described previously, the rating of the driver can be used in the driver selection process. For example, the rating can be used as a factor in calculating the base ranking of a driver. Furthermore, the rating can be used in the screening process to disqualify a driver based on requirements set by the owner of a load.

In some cases, the rating of a driver can be queried by one or more entities. For example, an insurance company or a bond agency can use the rating information to determine insurance, bond, or other information based on the rating of the driver. These or other entities can send a query to the cargo processing server. The query can include the identity information of one or more drivers. The cargo processing server can retrieve the rating and send a response to these entities. In some cases, the rating of the driver can also be used as a basis to determine compensation or awards to the driver by the owner of the load, the employer of the driver, or a combination thereof.

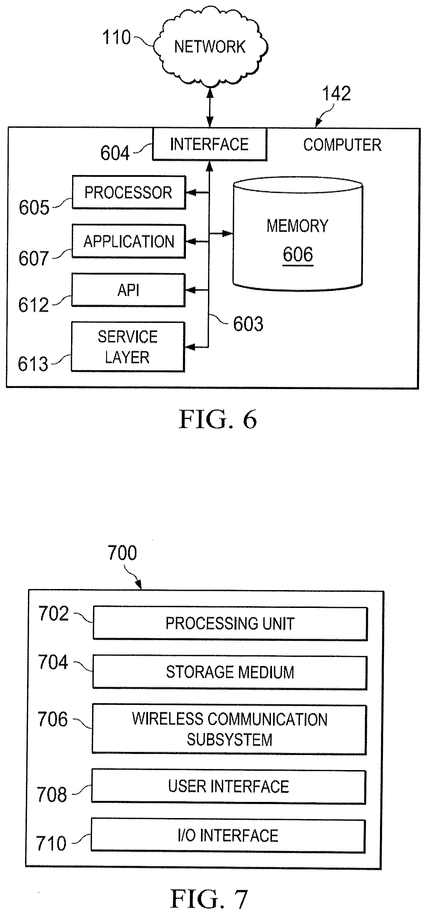

FIG. 6 illustrates a high level architecture block diagram of the cargo processing server 142 according to an implementation. The described illustration is one possible implementation of the described subject matter and is not intended to limit the disclosure to the single described implementation. Those of ordinary skill in the art will appreciate the fact that the described components can be connected, combined, and/or used in alternative ways consistent with this disclosure.

The cargo processing server 142 includes a computing system configured to process cargo delivery information, including receiving CTU status notifications, selecting CTUs, selecting drivers, generating delivery requests, generating delivery records, or any combinations thereof. In some cases, the processing algorithm of the cargo delivery information can be implemented in an executable computing code, e.g., C/C++ executable codes. In some cases, the cargo processing server 142 can include a standalone Linux system that runs batch applications. In some cases, the cargo processing server 142 can include mobile or personal computers.

The cargo processing server 142 may comprise a computer that includes an input device, such as a keypad, keyboard, touch screen, microphone, speech recognition device, other device that can accept user information, and/or an output device that conveys information associated with the operation of the computer, including digital data, visual and/or audio information, or a GUI.

The cargo processing server 142 can serve as a client, network component, a server, a database or other persistency, and/or any other components. In some implementations, one or more components of the cargo processing server 142 may be configured to operate within a cloud-computing-based environment.

At a high level, the cargo processing server 142 may be an electronic computing device operable to receive, transmit, process, store, or manage cargo delivery data and information. According to some implementations, the cargo processing server 142 can also include or be communicably coupled with an application server, e-mail server, web server, caching server, streaming data server, business intelligence (BI) server, and/or other server.

The cargo processing server 142 can receive requests over network 110 from a client application and respond to the received requests by processing the requests in an appropriate software application. In addition, requests may also be sent to the cargo processing server 142 from internal users (e.g., from a command console or by another appropriate access method), external or third parties, other automated applications, as well as any other appropriate entities, individuals, systems, or computers.

Each of the components of the cargo processing server 142 can communicate using a system bus 603. In some implementations, any and/or all the components of the cargo processing server 142, both hardware and/or software, may interface with each other and/or the interface 604 over the system bus 603 using an application programming interface (API) 612 and/or a service layer 613. The API 612 may include specifications for routines, data structures, and object classes. The API 612 may be either computer language-independent or -dependent and refer to a complete interface, a single function, or even a set of APIs. The service layer 613 provides software services to the cargo processing server 142. The functionality of the cargo processing server 142 may be accessible for all service consumers using this service layer. Software services, such as those provided by the service layer 613, provide reusable, defined business functionalities through a defined interface. For example, the interface may be software written in JAVA, C++, or other suitable language providing data in Extensible Markup Language (XML) format or other suitable format. While illustrated as an integrated component of the cargo processing server 142, alternative implementations may illustrate the API 612 and/or the service layer 613 as stand-alone components in relation to other components of the cargo processing server 142. Moreover, any or all parts of the API 612 and/or the service layer 613 may be implemented as child or sub-modules of another software module, enterprise application, or hardware module without departing from the scope of this disclosure.

The cargo processing server 142 includes an interface 604. Although illustrated as a single interface 604 in FIG. 6, two or more interfaces 604 may be used according to particular needs, desires, or particular implementations of the cargo processing server 142. The interface 604 is used by the cargo processing server 142 for communicating with other systems in a distributed environment connected to the network 110 (whether illustrated or not). Generally, the interface 604 comprises logic encoded in software and/or hardware in a suitable combination and operable to communicate with the network 110. More specifically, the interface 604 may comprise software supporting one or more communication protocols associated with communications such that the network 110 or interface's hardware is operable to communicate physical signals within and outside of the cargo processing server 142.

The cargo processing server 142 includes a processor 605. Although illustrated as a single processor 605 in FIG. 6, two or more processors may be used according to particular needs, desires, or particular implementations of the cargo processing server 142. Generally, the processor 605 executes instructions and manipulates data to perform the operations of the cargo processing server 142. Specifically, the processor 605 executes the functionality required for processing cargo delivery data.

The cargo processing server 142 also includes a memory 606 that holds data for the cargo processing server 142. Although illustrated as a single memory 606 in FIG. 6, two or more memories may be used according to particular needs, desires, or particular implementations of the cargo processing server 142. While memory 606 is illustrated as an integral component of the cargo processing server 142, in alternative implementations, memory 606 can be external to the cargo processing server 142.

The application 607 may be an algorithmic software engine providing functionality according to particular needs, desires, or particular implementations of the cargo processing server 142, particularly with respect to functionality required for processing cargo delivery data. Although illustrated as a single application 607, the application 607 may be implemented as multiple applications 607 on the cargo processing server 142. In addition, although illustrated as integral to the cargo processing server 142, in alternative implementations, the application 607 can be external to the cargo processing server 142.

There may be any number of the cargo processing server 142 associated with, or external to, and communicating over network 110. Further, this disclosure contemplates that many users may use one cargo processing server 142, or that one user may use multiple cargo processing servers 142.

FIG. 7 is a block diagram illustrating an example mobile device 700 according to an implementation. The example mobile device 700 can be used to run applications for the cargo shipping system, e.g., the driver client application, the cargo client application, or the shunt client application, described previously. The described illustration is a possible implementation of the described subject matter and is not intended to limit the disclosure to the single described implementation. Those of ordinary skill in the art will appreciate the fact that the described components can be connected, combined, and/or used in alternative ways consistent with this disclosure.

The illustrated device 700 includes a processing unit 702, a computer-readable storage medium 704 (for example, ROM or flash memory), a wireless communication subsystem 706, a user interface 708, and an I/O interface 710.

The processing unit 702 can include one or more processing components (alternatively referred to as "processors" or "central processing units" (CPUs)) configured to execute instructions related to one or more of the processes, steps, or actions described herein in connection with one or more of the implementations disclosed herein. In some implementations, the processing unit 702 may be configured to generate control information, such as a measurement report, or to respond to received information, such as control information from a network node. The processing unit 702 may also be configured to make a Radio Resource Management (RRM) decision such as cell selection/reselection information, or trigger a measurement report. The processing unit 702 can also include other auxiliary components, such as random access memory (RAM) and read-only memory (ROM).

The computer-readable storage medium 704 can store an operating system (OS) of the device 700 and various other computer-executable instructions, logic or software programs for performing one or more of the processes, steps, or actions described above. In some cases, the computer-readable storage medium 704 can be transitory, non-transitory, or a combination thereof.

The wireless communication subsystem 706 may be configured to provide wireless communication for voice, data, and/or control information provided by the processing unit 702. The wireless communication subsystem 706 can include, for example, one or more antennas, a receiver, a transmitter, a local oscillator, a mixer, and a digital signal processing (DSP) unit. In some implementations, the subsystem 706 can support multiple-input multiple-output (MIMO) transmissions. In some implementations, the receiver in the wireless communication subsystems 706 can be an advanced receiver or a baseline receiver. Two receivers can be implemented with identical, similar, or different receiver processing algorithms.

The user interface 708 can include, for example, one or more of a screen or touch screen (for example, a liquid crystal display (LCD), a light emitting display (LED), an organic light emitting display (OLED), a micro-electromechanical system (MEMS) display), a keyboard or keypad, a trackball, a speaker, and a microphone. The I/O interface 710 can include, for example, a universal serial bus (USB) interface.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non-transitory computer-storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The terms "data processing apparatus," "computer," or "electronic computer device" (or equivalent as understood by one of ordinary skill in the art) refer to data processing hardware and encompass all kinds of apparatus, devices, and machines for processing data, including by way of example, a programmable processor, a computer, or multiple processors or computers. The apparatus can also be or further include special purpose logic circuitry, e.g., a central processing unit (CPU), an FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components, as appropriate.

The processes and logic flows described in this specification can be performed by one or more programmable computers, executing one or more computer programs to perform functions by operating on input data and generating output. The processes and logic flows can also be performed by, and apparatus can also be implemented as, special purpose logic circuitry, e.g., a CPU, an FPGA, or an ASIC.

Computers suitable for the execution of a computer program can be based on general or special purpose microprocessors, both, or any other kind of CPU. Generally, a CPU will receive instructions and data from a read only memory (ROM) or a random access memory (RAM) or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a global positioning system (GPS) receiver, or a portable storage device, e.g., a universal serial bus (USB) flash drive, to name just a few.

Computer readable media (transitory or non-transitory, as appropriate) suitable for storing computer program instructions and data include all forms of non volatile memory, media and memory devices, including by way of example semiconductor memory devices, e.g., erasable programmable read-only memory (EPROM), electrically erasable programmable read-only memory (EEPROM), and flash memory devices; magnetic disks, e.g., internal hard disks or removable disks; magneto optical disks; and CD ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD (liquid crystal display), LED (Light Emitting Diode), or plasma monitor, for displaying information to the user and a keyboard and a pointing device, e.g., a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or "GUI," may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pulldown lists, and buttons operable by the business suite user. These and other UI elements may be related to or represent the functions of the web browser.

Implementations of the subject matter described in this specification can be implemented in a computing system that includes a back end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back end, middleware, or front end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an application programming interface (API) and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in extensible markup language (XML) format or other suitable format. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can, in some cases, be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking and parallel processing may be advantageous.

Moreover, the separation and/or integration of various system modules and components in the implementations described above should not be understood as requiring such separation and/or integration in all implementations, and it should be understood that the described program components and systems can generally be integrated together in a single software product or packaged into multiple software products.

## Claims

1. A computer-implemented method (200) for improving an efficiency of a cargo shipping system (100), the method comprising:
receiving (202), by a server (142), a cargo transportation unit, CTU (102), status notification from a cargo tracking device installed on a CTU, wherein the CTU status notification indicates a load status of the CTU, and wherein the CTU status notification is received periodically, and wherein the cargo tracking device determines a current speed of the CTU based on a change of location of the CTU and the cargo tracking device changes a periodicity of the CTU status notification based on the current speed of the CTU;
in response to receipt of the CTU status notification, determining (204), by the server, that the CTU is ready for shipment;
receiving (206), by the server, availability information associated with each of a plurality of drivers;
selecting (208), by the server and based on the CTU status notification and the availability information, a driver for the CTU from the plurality of drivers; and
sending (210) a delivery request to the selected driver.

2. The method (200) of claim 1, wherein the CTU status notification further indicates a location of the CTU (102).

3. The method (200) of claim 1, further comprising:
receiving supplemental information of a load on the CTU (102), wherein the supplemental information comprises at least one of a type of the load, a value of the load, or a priority of the load, and the driver is selected based at least in part on the supplemental information of the load.

4. The method (200) of claim 1, further comprising:
receiving a location information associated with the selected driver;
receiving an updated CTU status notification from the cargo tracking device;
determining, based on the location information and the updated CTU status notification, that the CTU (102) is en route; and
in response to determining that the CTU is en route, sending a confirmation.

5. The method (200) of claim 1, wherein the CTU (102) is at least one of a trailer or a shipping container.

6. The method (200) of claim 1, wherein the driver is an automated driving system.

7. An electronic device (142), comprising:
a memory (606); and
at least one hardware processor (605) communicatively coupled with the memory and configured to:
receive (202) a cargo transportation unit, CTU (102), status notification from a cargo tracking device installed on a CTU, wherein the CTU status notification indicates a load status of the CTU, and wherein the CTU status notification is received periodically, and wherein the cargo tracking device determines a current speed of the CTU based on a change of location of the CTU and the cargo tracking device changes a periodicity of the CTU status notification based on the current speed of the CTU;
in response to receipt of the CTU status notification, determine (204) that the CTU is ready for shipment;
receive (206) availability information associated with each of a plurality of drivers;
select (208), based on the CTU status notification and the availability information, a driver for the CTU from the plurality of drivers; and
send (210) a delivery request to the selected driver.

8. The electronic device (142) of claim 7, wherein the CTU status notification further indicates a location of the CTU (102).

9. The electronic device (142) of claim 7, wherein the at least one hardware processor is configured to receive supplemental information of a load on the CTU (102), and wherein the supplemental information comprises at least one of a type of the load, a value of the load, or a priority of the load, and the driver is selected based at least in part on the supplemental information of the load.

10. The electronic device (142) of claim 7, wherein the at least one hardware processor is configured to:
receive a location information associated with the selected driver;
receive an updated CTU status notification from the cargo tracking device;
determine, based on the location information and the updated CTU status notification, that the CTU (102) is en route; and
in response to determining that the CTU is en route, send a confirmation.

11. The electronic device (142) of claim 7, wherein the CTU is at least one of a trailer or a shipping container.

12. The electronic device (142) of claim 7, wherein the driver is an automated driving system.

13. A non-transitory computer-readable medium containing instructions which, when executed, cause a computing device (142) to perform the method of any one of claims 1 to 6.

## Patentansprüche

1. Ein computerimplementiertes Verfahren (200) zum Verbessern einer Effizienz eines Frachtversandsystems (100), wobei das Verfahren Folgendes beinhaltet:
Empfangen (202), durch einen Server (142), einer Statusbenachrichtigung einer Frachtbeförderungseinheit, CTU (102), von einer auf einer CTU installierten Frachtverfolgungsvorrichtung, wobei die CTU-Statusbenachrichtigung einen Ladungsstatus der CTU angibt und wobei die CTU-Statusbenachrichtigung periodisch empfangen wird und wobei die Frachtverfolgungsvorrichtung eine aktuelle Geschwindigkeit der CTU auf der Basis einer Standortänderung der CTU bestimmt und die Frachtverfolgungsvorrichtung eine Periodizität der CTU-Statusbenachrichtigung auf der Basis der aktuellen Geschwindigkeit der CTU ändert;
als Reaktion auf den Empfang der CTU-Statusbenachrichtigung, Bestimmen (204), durch den Server, dass die CTU versandbereit ist;
Empfangen (206), durch den Server, von mit jedem einer Vielzahl von Fahrern assoziierten Verfügbarkeitsinformationen;
Auswählen (208), durch den Server und auf der Basis der CTU-Statusbenachrichtigung und der Verfügbarkeitsinformationen, eines Fahrers für die CTU aus der Vielzahl von Fahrern; und
Senden (210) einer Lieferungsanfrage an den ausgewählten Fahrer.

2. Verfahren (200) gemäß Anspruch 1, wobei die CTU-Statusbenachrichtigung ferner einen Standort der CTU (102) angibt.

3. Verfahren (200) gemäß Anspruch 1, das ferner Folgendes beinhaltet:
Empfangen zusätzlicher Informationen zu einer Ladung auf der CTU (102), wobei die zusätzlichen Informationen mindestens eines von einer Art der Ladung, einem Wert der Ladung oder einer Priorität der Ladung beinhalten und der Fahrer mindestens teilweise auf der Basis der zusätzlichen Informationen zu der Ladung ausgewählt wird.

4. Verfahren (200) gemäß Anspruch 1, das ferner Folgendes beinhaltet:
Empfangen von mit dem ausgewählten Fahrer assoziierten Standortinformationen;
Empfangen einer aktualisierten CTU-Statusbenachrichtigung von der Frachtverfolgungsvorrichtung;
Bestimmen, auf der Basis der Standortinformationen und der aktualisierten CTU-Statusbenachrichtigung, dass die CTU (102) auf dem Weg ist; und
als Reaktion auf das Bestimmen, dass die CTU auf dem Weg ist, Senden einer Bestätigung.

5. Verfahren (200) gemäß Anspruch 1, wobei die CTU (102) mindestens eines von einem Anhänger oder einem Versandcontainer ist.

6. Verfahren (200) gemäß Anspruch 1, wobei der Fahrer ein automatisiertes Fahrsystem ist.

7. Eine elektronische Vorrichtung (142), die Folgendes beinhaltet:
einen Speicher (606); und
mindestens einen Hardwareprozessor (605), der mit dem Speicher kommunikativ gekoppelt ist und für Folgendes konfiguriert ist:
Empfangen (202) einer Statusbenachrichtigung einer Frachtbeförderungseinheit, CTU (102), von einer auf einer CTU installierten Frachtverfolgungsvorrichtung, wobei die CTU-Statusbenachrichtigung einen Ladungsstatus der CTU angibt und wobei die CTU-Statusbenachrichtigung periodisch empfangen wird und wobei die Frachtverfolgungsvorrichtung eine aktuelle Geschwindigkeit der CTU auf der Basis einer Standortänderung der CTU bestimmt und die Frachtverfolgungsvorrichtung eine Periodizität der CTU-Statusbenachrichtigung auf der Basis der aktuellen Geschwindigkeit der CTU ändert;
als Reaktion auf den Empfang der CTU-Statusbenachrichtigung, Bestimmen (204), dass die CTU versandbereit ist;
Empfangen (206) von mit jedem einer Vielzahl von Fahrern assoziierten Verfügbarkeitsinformationen;
Auswählen (208), auf der Basis der CTU-Statusbenachrichtigung und der Verfügbarkeitsinformationen, eines Fahrers für die CTU aus der Vielzahl von Fahrern; und
Senden (210) einer Lieferungsanfrage an den ausgewählten Fahrer.

8. Elektronische Vorrichtung (142) gemäß Anspruch 7, wobei die CTU-Statusbenachrichtigung ferner einen Standort der CTU (102) angibt.

9. Elektronische Vorrichtung (142) gemäß Anspruch 7, wobei der mindestens eine Hardwareprozessor zum Empfangen zusätzlicher Informationen zu einer Ladung auf der CTU (102) konfiguriert ist und wobei die zusätzlichen Informationen mindestens eines von einer Art der Ladung, einem Wert der Ladung oder einer Priorität der Ladung beinhalten und der Fahrer mindestens teilweise auf der Basis der zusätzlichen Informationen zu der Ladung ausgewählt wird.

10. Elektronische Vorrichtung (142) gemäß Anspruch 7, wobei der mindestens eine Hardwareprozessor für Folgendes konfiguriert ist:
Empfangen von mit dem ausgewählten Fahrer assoziierten Standortinformationen;
Empfangen einer aktualisierten CTU-Statusbenachrichtigung von der Frachtverfolgungsvorrichtung;
Bestimmen, auf der Basis der Standortinformationen und der aktualisierten CTU-Statusbenachrichtigung, dass die CTU (102) auf dem Weg ist; und
als Reaktion auf das Bestimmen, dass die CTU auf dem Weg ist, Senden einer Bestätigung.

11. Elektronische Vorrichtung (142) gemäß Anspruch 7, wobei die CTU mindestens eines von einem Anhänger oder einem Versandcontainer ist.

12. Elektronische Vorrichtung (142) gemäß Anspruch 7, wobei der Fahrer ein automatisiertes Fahrsystem ist.

13. Ein nichttransitorisches computerlesbares Medium, das Anweisungen enthält, die bei Ausführung eine Rechenvorrichtung (142) dazu veranlassen, das Verfahren gemäß einem der Ansprüche 1 bis 6 durchzuführen.

## Revendications

1. Un procédé mis en oeuvre par ordinateur (200) destiné à améliorer une efficience d'un système d'expédition de cargaison (100), le procédé comprenant :
le fait de recevoir (202), par un serveur (142), une notification d'état d'unité de transport de cargaison, CTU (*Cargo Transportation Unit*) (102), en provenance d'un dispositif de suivi de cargaison installé sur une CTU, la notification d'état de CTU indiquant un état de charge de la CTU, et la notification d'état de CTU étant reçue périodiquement, et le dispositif de suivi de cargaison déterminant une vitesse actuelle de la CTU sur la base d'un changement d'emplacement de la CTU et le dispositif de suivi de cargaison changeant une périodicité de la notification d'état de CTU sur la base de la vitesse actuelle de la CTU ;
en réponse à la réception de la notification d'état de CTU, le fait de déterminer (204), par le serveur, que la CTU est prête à être expédiée ;
le fait de recevoir (206), par le serveur, des informations de disponibilité associées à chaque conducteur d'une pluralité de conducteurs ;
le fait de sélectionner (208), par le serveur et sur la base de la notification d'état de CTU et des informations de disponibilité, un conducteur pour la CTU parmi la pluralité de conducteurs ; et
le fait d'envoyer (210) une demande de livraison au conducteur sélectionné.

2. Le procédé (200) de la revendication 1, dans lequel la notification d'état de CTU indique en outre un emplacement de la CTU (102).

3. Le procédé (200) de la revendication 1, comprenant en outre :
le fait de recevoir des informations supplémentaires relatives à une charge sur la CTU (102), les informations supplémentaires comprenant au moins une information parmi un type de la charge, une valeur de la charge, ou un caractère prioritaire de la charge, et le conducteur étant sélectionné au moins en partie sur la base des informations supplémentaires relatives à la charge.

4. Le procédé (200) de la revendication 1, comprenant en outre :
le fait de recevoir une information d'emplacement associée au conducteur sélectionné ;
le fait de recevoir une notification d'état de CTU mise à jour en provenance du dispositif de suivi de cargaison ;
le fait de déterminer, sur la base de l'information d'emplacement et de la notification d'état de CTU mise à jour, que la CTU (102) est en route ; et
en réponse à la détermination du fait que la CTU est en route, le fait d'envoyer une confirmation.

5. Le procédé (200) de la revendication 1, dans lequel la CTU (102) est au moins un élément parmi une remorque et un conteneur d'expédition.

6. Le procédé (200) de la revendication 1, dans lequel le conducteur est un système de conduite automatisée.

7. Un dispositif électronique (142), comprenant :
une mémoire (606) ; et
au moins un processeur matériel (605) couplé de manière à communiquer avec la mémoire et configuré pour :
recevoir (202) une notification d'état d'unité de transport de cargaison, CTU (102), en provenance d'un dispositif de suivi de cargaison installé sur une CTU, la notification d'état de CTU indiquant un état de charge de la CTU, et la notification d'état de CTU étant reçue périodiquement, et le dispositif de suivi de cargaison déterminant une vitesse actuelle de la CTU sur la base d'un changement d'emplacement de la CTU et le dispositif de suivi de cargaison changeant une périodicité de la notification d'état de CTU sur la base de la vitesse actuelle de la CTU ;
en réponse à la réception de la notification d'état de CTU, déterminer (204) que la CTU est prête à être expédiée ;
recevoir (206) des informations de disponibilité associées à chaque conducteur d'une pluralité de conducteurs ;
sélectionner (208), sur la base de la notification d'état de CTU et des informations de disponibilité, un conducteur pour la CTU parmi la pluralité de conducteurs ; et
envoyer (210) une demande de livraison au conducteur sélectionné.

8. Le dispositif électronique (142) de la revendication 7, dans lequel la notification d'état de CTU indique en outre un emplacement de la CTU (102).

9. Le dispositif électronique (142) de la revendication 7, dans lequel l'au moins un processeur matériel est configuré pour recevoir des informations supplémentaires relatives à une charge sur la CTU (102), et les informations supplémentaires comprenant au moins une information parmi un type de la charge, une valeur de la charge, ou un caractère prioritaire de la charge, et le conducteur étant sélectionné au moins en partie sur la base des informations supplémentaires relatives à la charge.

10. Le dispositif électronique (142) de la revendication 7, dans lequel l'au moins un processeur matériel est configuré pour :
recevoir une information d'emplacement associée au conducteur sélectionné ;
recevoir une notification d'état de CTU mise à jour en provenance du dispositif de suivi de cargaison ;
déterminer, sur la base de l'information d'emplacement et de la notification d'état de CTU mise à jour, que la CTU (102) est en route ; et
en réponse à la détermination du fait que la CTU est en route, envoyer une confirmation.

11. Le dispositif électronique (142) de la revendication 7, dans lequel la CTU est au moins un élément parmi une remorque et un conteneur d'expédition.

12. Le dispositif électronique (142) de la revendication 7, dans lequel le conducteur est un système de conduite automatisée.

13. Un support non transitoire lisible par ordinateur contenant des instructions qui, lorsqu'elles sont exécutées, amènent un dispositif informatique (142) à réaliser le procédé de l'une quelconque des revendications 1 à 6.
